# EUROPÄISCHE PATENTSCHRIFT

(11) **EP 1 558 170 B1**
(45) Veröffentlichungstag und Bekanntmachung des Hinweises auf die Patenterteilung: **26.12.2007**
(21) Anmeldenummer: 03779680.2
(22) Anmeldetag: 31.10.2003
(51) Int. Cl.: A61C 13/083, A61C 13/00

(54) **VERFAHREN ZUR HERSTELLUNG VOLLKERAMISCHER ZAHNTEILE MIT VORBESTIMMTER RAUMFORM MITTELS ELEKTROPHORESE**
METHOD FOR PRODUCING FULLY CERAMIC TOOTH ELEMENTS HAVING A PRE-DETERMINED SPATIAL FORM BY MEANS OF ELECTROPHORESIS
PROCEDE DE FABRICATION PAR ELECTROPHORESE D'ELEMENTS DENTAIRES ENTIEREMENT COMPOSES DE CERAMIQUE, PRESENTANT UNE FORME SPATIALE DEFINIE

(30) Priorität: 05.11.2002 DE 10251369; 13.12.2002 DE 10258244
(43) Veröffentlichungstag der Anmeldung: 03.08.2005
(73) Patentinhaber: Wolz, Stefan, 55566 Bad Sobernheim (DE)
(72) Erfinder: Wolz, Stefan, 55566 Bad Sobernheim (DE)
(74) Vertreter: Wagner, Jutta
(86) Internationale Anmeldenummer: PCT/DE2003/003628
(87) Internationale Veröffentlichungsnummer: WO 2004/041113

(56) Entgegenhaltungen:
- WO-A-99/50480
- DE-A- 10 021 437
- DE-A- 10 049 971

## Beschreibung

Aus der DE 198 52 740A1 ist bereits ein Verfahren zur Herstellung vollkeramischer Brüclcengerüste bekannt. Nach diesem Verfahren werden zunächst zwei Käppchen, die z.B. aus einem Alumina-Schlicker hergestellt sind, mit einem Brückenzwischenglied aus dem gleichen Material verbunden. Der solchermaßen hergestellte Grünkörper wird anschließend gesintert und glasinfiltriert. Davon abgesehen, dass das Herstellen und Einpassen des Brückenzwischengliedes viel Geschick erfordert, kann an den Stoßstellen zwischen den Käppchen und dem Zwischenglied die mechanische Verbindung wegen Gefügeprobleme nicht zufrieden stellend ausfallen.

Aus der DE 100 21 437 A1 ist ferner ein elektrophoretisches Verfahren zur Herstellung von vollkeramischen Käppchen aus Alumina bekannt, wobei der Stumpf eines Arbeitsmodells mit einer Folie oder einem Trennmittel, das bei Temperaturen über 45°C flüssig ist und bei Raumtemperatur eine lippenstiftartige Konsistenz aufweist, überzogen wird, auf diesen Überzug ein Schlicker aufgebracht wird und nach Trennung vom Arbeitsmodell der Schlicker nach Trocknung zum Gerüst gebrannt wird, das anschließend glasinfiltriert wird. Der Überzug wird aufgebracht, indem ein elektrisch leitfähiger Überzug verwendet wird, der in ein Gefäß mit Schlicker getaucht wird und durch Anlegen einer Gleichspannung zwischen dem Gefäß und dem leitfähigen Überzug ein Auftrag des Feststoffes des Schlickers auf dem Stumpf des Arbeitsmodells erfolgt.

Unter dem Begriff Schlicker ist, wie in der Keramik üblich, eine Aufschlämmung von Keramikmaterial in einer wässrigen Flüssigkeit zu verstehen, obschon ausweislich der WO 99/50480 bei der Herstellung von keramischen Käppchen gegen Wasser als Suspensionsmittel ein Vorurteil besteht.

Es ist daher Aufgabe der im Anspruch 1 angegebenen Erfindung, das Elektrophoreseverfahren in der Zahntechnik so weiterzubilden, dass eine gewünschte Raumform des niedergeschlagenen Schlickermaterials erzielt wird, die keine oder fast keine Nacharbeitung verlangt. Hierbei hat es sich ferner gezeigt, das das erfindungsgemäße Verfahren nicht nur zur Herstellung von Gerüsten geeignet ist, sondern auch zum Niederschlag von Verblendmaterial in einer gewünschten Raumform.
Diese Aufgabe wird mit den Merkmalen des Anspruchs 1 gelöst.
Vorteilhafte Ausführungsformen sind in den abhängigen Ansprüchen beschrieben.

Die Erfindung wird anhand der Figuren 1 bis 12 näher erläutert:

Es zeigen:
- Figur 1:: zwei Zahnstümpfe in einem Aufnahmeteil der Beschichtungsmaschine
- Figur 2:: eine Draufsicht auf Figur 1
- Figur 3:: die Zahnstümpfe der Figur 1 nach der Beschichtung
- Figur 4:: eine zweite Ausführungsform des Leitplättchens
- Figur 5:: Die Herstellung eines Brückengerüstes für zwei Zahnstümpfe
- Figur 6:: Schnitt O-O der Figur 1
- Figur 7:: Schnitt O'-O' der Figur 1
- Figur 8:: Herstellung einer Brücke in der Unterkieferfront
- Figur 9:: Schnitt durch einen Backenzahn
- Figur 10:: Draufsicht auf den Backenzahn gemäß Figur 9
- Figur 11:: Herstellung eines Frontzahnes
- Figur 12:: Schnitt A-A in der Figur 11

Die Erfindung wird nachstehend noch weiter erläutert.

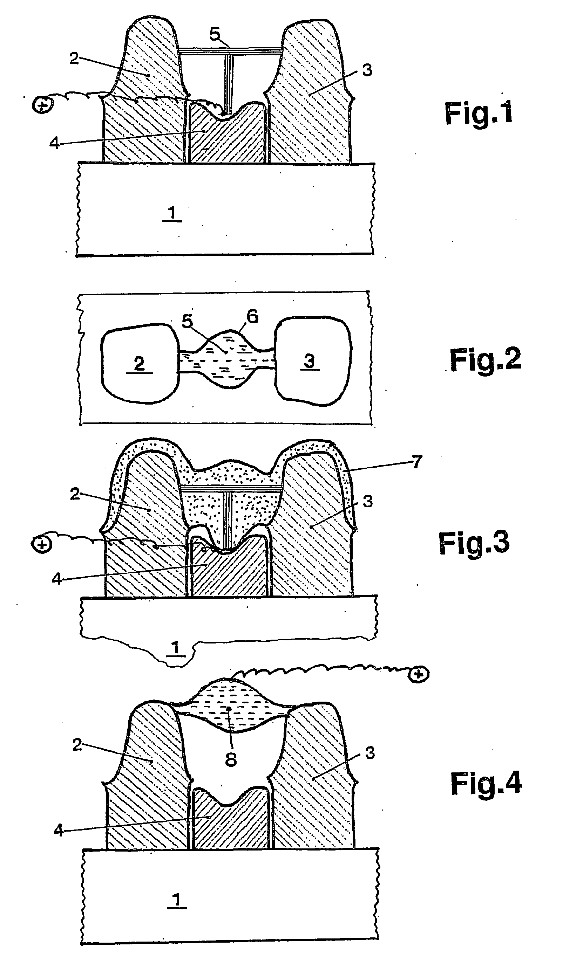

Figur 1 zeigt ein Aufnahmeteil 1, üblicher Weise aus Aluminium, für eine elektrophoretische Beschichtungsmaschine. Zum besseren Verstehen sind alle Figuren um 180° gedreht gezeigt. In der Maschine selbst sind die Gipsstümpfe 2 und 3 hängend angeordnet, in dem sie in dem Aufnahmeteil 1 z.B. mittels einer Einbettmasse fixiert sind, wobei ein zwischenliegendes Kieferteil 4 noch vorgesehen ist, das den Raum des verlorenen Zahnes ausfüllt.

Mit dem Bezugszeichen 5 ist ein leitfähiges Plättchen gezeigt, das einen T-förmigen Querschnitt aufweist. Das Plättchen 5 kann aus den verschiedensten Materialien gefertigt sein. Wesentlich ist, dass es leitfähig ist. Welche Materialien in Frage kommen, wird in Folge noch erwähnt.

Das Plättchen ist im Fußteil mit dem Pluspol der Elektrophorese verbunden.

Figur 2 zeigt eine Draufsicht auf Figur 1. Hierbei ist ersichtlich, dass das Plättchen im Dachbereich eine Verdickung 6 aufweist.

In der Maschine wird ein herkömmlicher Schlicker hergestellt mit einem Mischungsverhältnis von 30g Aluminapulver (Hersteller Vita) und 5ml Wasser und einem Tropfen Additiv (Hersteller Vita). In diesem Schlicker wird die Anordnung nach Figur 1 getaucht, die ein Plättchen 5 aus Nylonpapier aufweist, nachdem die Stümpfe 2,3 und das Plättchen 5 mit konzentrierter Kochsalzlösung leitend gemacht wurden. Beim Anlegen einer Spannung von ca. 36 Volt fließt ein Strom von 20-40 mA, der ein Brückengerüst 7 ausbildet, wie es in Figur 3 gezeigt ist. Dieses Gerüst wird in herkömmlicher Weise gesintert und glasinfiltriert. Damit das Leitungskabel nicht beschichtet wird, ist es ab dem Berührungspunkt mit dem Plättchen isoliert.

Beim Sintern verbrennt das Plättchen 5 rückstandsfrei, hinterlässt aber einen entsprechenden Hohlraum, der mit Schlicker ausgefüllt bei einem zweiten Sinternvorgang nachgesintert wird. Ein Ausfüllen dieses Hohlraumes kann auch durch das Glas bei der Infiltration erfolgen.

Wenn die oben erwähnte Hohlraumbildung vermieden werden soll, bieten sich einige Möglichkeiten an. Beispielswiese kann das Plättchen 5 aus Aluminafasern - oder wisker hergestellt sein. Beim diesem Ausführungsformen wird das Plättchenmaterial einfach in das Brückenzwischenglied eingesintert. Eine andere Möglichkeit ist durch eine andere Geometrie gegeben, wie es in der Figur 4 gezeigt ist. Hier liegt das Plättchen 8 mehr oder weniger auf den Stümpfen 2,3 auf. Das Plättchen 8 ist an der Außenseite isoliert, damit sich dort kein Niederschlag bildet. Das Leitungskabel ist aus nämlichem Grund ebenfalls vollständig isoliert.

Eine weitere Möglichkeit besteht darin, das Plättchen aus einem Material zu fertigen, das eine Metallfolie zwischen zwei Schichten aus Faserstoff (z.B. Papier) aufweist. Die Verwendung einer reinen Metallfolie ist zwar prinzipiell auch möglich, jedoch hat sich gezeigt, dass hier die hohe Stromstärke zu Blasenbildung führt, was Defekte im Material nach sich ziehen kann.

Aus obigen Ausführungen ist auch ersichtlich, dass durch die geometrische Ausbildung des Plättchens der Örtliche Materialfluss und damit die dreidimensionale Form des Brückengerüstes stark beeinflussbar sind. Im Allgemeinen gilt, dass der Materialniederschlag von der Höhe der örtlichen Stromstärke abhängt.

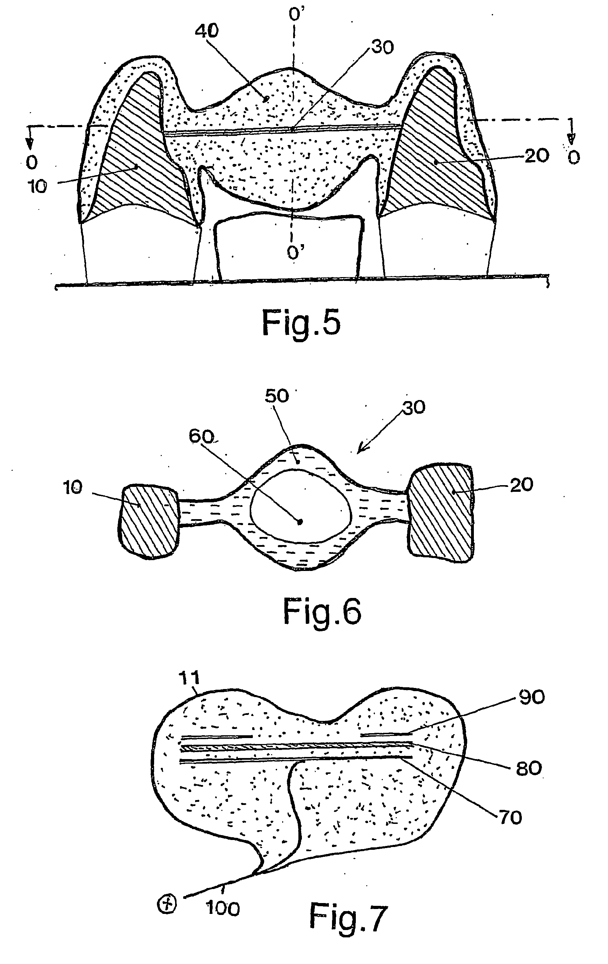

Figur 5 zeigt die Herstellung eines Brückengerüstes, wie es bereits oben beschrieben ist. Zwischen zwei Stümpfen eines Arbeitsmodelles ist ein Plättchen 30 angebracht. Wie aus Figur 6 ersichtlich, weist das Plättchen 30 einen Bereich 60 auf, der im Gegensatz zum Bereich 50 weniger leitend ist. Dies wird durch einen Aufbau des Plättchens erzielt, wie es in Figur 7 in Explosionsdarstellung gezeigt ist. Hierbei weist das Plättchen 30 eine metallische Unterschicht 70 aus Aluminium mit einer Stärke von 0,05 mm auf, auf die eine Schicht 80 aus Nylonpapier aufgelegt ist. Auf dieses Nylonpapier ist ferner eine Schicht 90, wiederum aus Aluminiumfolie, aufgebracht, die den elektrisch stärker leitenden Bereich 50 entsprechend der in der Figur 6 gezeigten Form bildet. Die Unterschicht 70 aus Aluminium ist über eine Leitung 100 mit dem Pluspol der Elektrophoreseapparatur verbunden. Die Stümpfe 10,20 aus Gips und das Plättchen 30 werden zunächst durch Eintauchen in eine Salzlösung elektrisch leitend gemacht. Wenn nun in bekannter Weise das Brückenmaterial 40 durch Elektrophorese aufgetragen wird, führt es im Bereich der Metallfolie, also im Bereich 50 und unterhalb der Folie 70, aufgrund der höheren Stromstärke zu einem verstärkten Materialniederschlag, so dass nach Abschalten des Stromes bereits ein Brückengerüst in der gewünschten Raumform vorliegt. Insbesondere können damit die in Figur 7 gezeigten Höcker 11 erzeugt werden. Auf dieses Brückengerüst kann dann unmittelbar nach Sinterung und Glasinfiltrierung das Verblendmaterial aufgetragen werden.

Das Plättchen mit den unterschiedlich leitenden Bereichen kann selbstverständlich auf vielfältige Weise hergestellt werden. So ist es möglich, nur eine metallische Folie zu verwenden, auf die mehr oder weniger isolierende Bereiche aufgebracht sind. Andererseits kann die Basisschicht, wie bei obigem Beispiel aus Nylonpapier oder einer ähnlichen, am besten nichttextilen Schicht bestehen, auf die eine metallische Struktur, beispielsweise durch Siebdruck, aufgebracht ist. Da ferner die bei der Platillenherstellung bekannte Technik hier gut eingesetzt werden kann, besteht keine Schwierigkeit, auch sehr komplizierte Formen zu erzeugen.

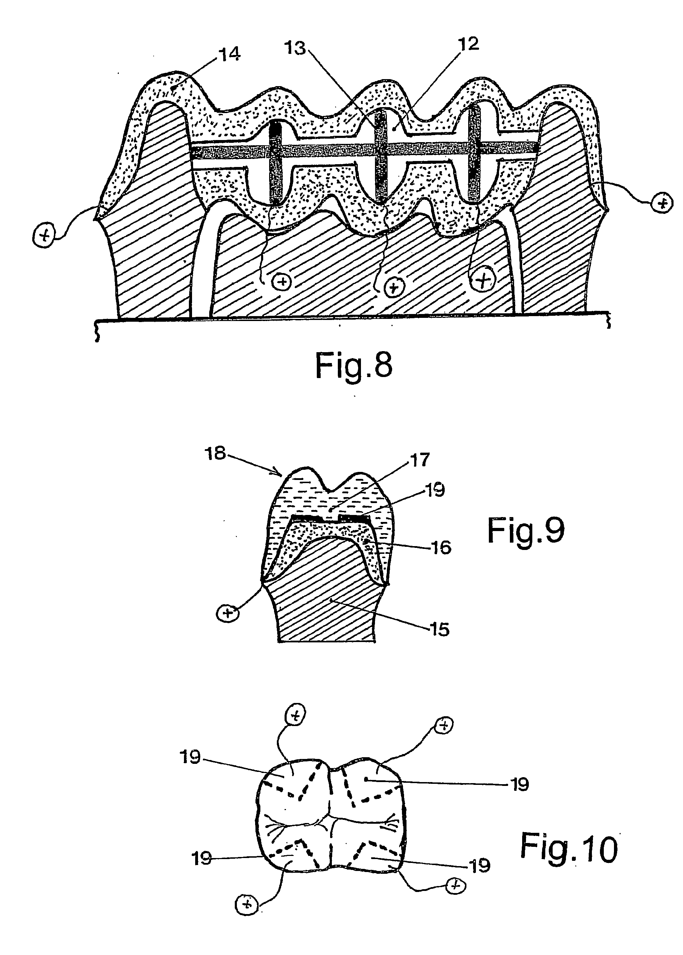

In Figur 8 ist die Herstellung eines mehrgliedrigen Brückengerüstes im Unterkieferbereich gezeigt. Auf dem Plättchen 12, das der Form des Zwischengliedes angepasst ist, das drei Zähne ersetzen soll, ist ein leitender Bereich 13 aufgebracht. Durch Elektrophorese wird eine Materialschicht 14 niedergeschlagen, die schon die gewünschte Raumform aufweist.

Figur 9 zeigt die Herstellung eines Backenzahnes. Auf dem Arbeitsstumpf 15 befindet sich ein bereits fertiges Käppchen 16, das mit dem Verblendmaterial 17 zu verblenden ist. Auf das Käppchen 16 wird ein nicht näher gezeigtes Plättchen aufgelegt, das metallische Bereiche 19 aufweist, deren Dreiecksform in Figur 10 deutlich zu erkennen ist. Beim Niederschlag des Verblendmaterials aus einem Schlicker bilden sich über den vier metallischen Bereichen 19 vier Höcker 18, die für einen Backenzahn typisch sind. Da der Sinterschrumpf beim Aufbringen des Verblendmaterials mit eingerechnet ist, hat der Backenzahn nach dem Sintern bereits die gewünschte Raumform, so dass Nacharbeiten kaum noch erforderlich sind.

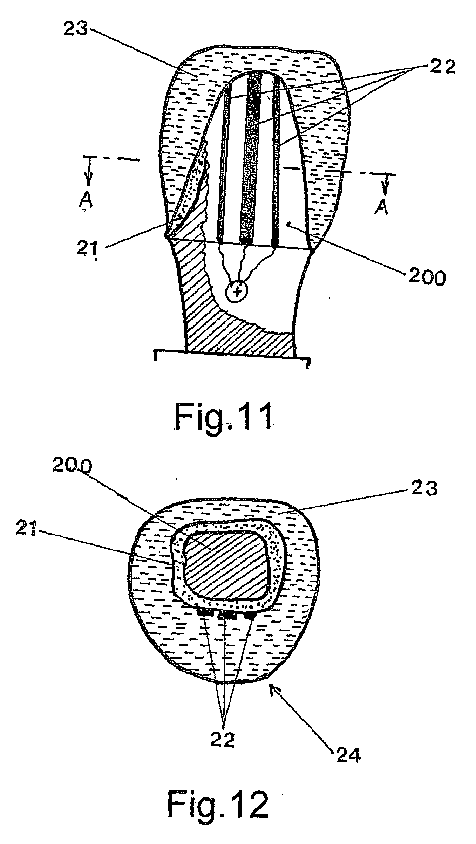

In den Figuren 11 und 12 ist die Herstellung eines Frontzahnes gezeigt: Auf einem Gipsstumpf 200 befindet sich ein fertiges Käppchen 21, wobei das Käppchen an der Frontseite mit einem Plättchen, z.B. aus Nylonpapier, belegt ist. Dieses Plättchen weist drei Metallstreifen 22 auf, von denen der mittlere etwas breiter ist. Bei der Durchführung der Elektrophorese führt dies dazu, dass das aufgebrachte Verblendmaterial 23 auf der Frontseite bereits die gewünschte Stärke und Wölbung 24 aufweist, so dass zur Fertigstellung des Zahnes nur noch Feinarbeit notwendig ist.

Bei den in den Figuren 9 bis 12 gezeigten beiden Ausführungsformen der Erfindung liegt das Plättchen entweder auf einem Gerüstteil (Käppchen 16 in Figur 9 oder Käppchen 21 in Figur 11) auf. Es ist aber auch möglich, dass das Plättchen mit Abstand von dem Käppchen angebracht ist. Hierbei wird vor dem Auftragen des Verblendmaterials der gewünschten Außenkontur des Verblendmaterials angepasst, so dass bei der Elektrophorese lediglich der Zwischenraum zwischen Käppchen und Plättchen ausgefüllt wird, der dann genau der gewünschten Raumform der Verblendung entspricht. In diesem Fall ist das Plättchen nur auf der dem Käppchen zugewandten Seite elektrisch leitend und auf der Außenseite isoliert und hat somit neben der Stromzuführungsfunktion auch eine Formfunktion.
Dieses Prinzip lässt sich selbstverständlich auch bei der Herstellung von Gerüsten realisieren.

Die Plättchen können aus naheliegenden Gründen nach dem Auftragen des Materials nicht entfernt werden, sondern verbleiben beim Sintern an Ort und Stelle, mit der Ausnahme, wenn das Plättchen als Form an der Außenseite angebracht ist. Wie die bisherigen Versuche aber gezeigt haben, ist das Verbleiben des Käppchens nicht nachteilig. Soweit Aluminium verwendet wird, wird es während des Sintervorganges einfach zu Alumina aufoxidiert und stört nicht weiter. Organisches Material, wie z. B Nylon, verbrennt praktisch rückstandsfrei. Der vom Plättchen eingenommene Hohlraum wird beim Glasinfiltrieren voll ausgefüllt und hat ferner noch den Vorteil, dass er zunächst als Gasentweichungskanal vor dem Ausfüllen dient. Eine mechanische Schwächung des Materials ist daher im Endzustand nicht feststellbar.

Mit der vorliegenden Erfindung ist daher ein weiter Schritt gemacht, Patienten kostengünstig mit hochwertigem vollkeramischen Zahnersatz zu versorgen.

## Patentansprüche

1. Verfahren zur Herstellung vollkeramischer Zahnteile mit vorbestimmter Raumform mittels Elektrophorese, **dadurch gekennzeichnet, dass** ein elektrisch leitendes oder leitend gemachtes Plättchen an einem Arbeitsmodell oder an einem Gerüstteil direkt oder mit Abstand angeordnet wird, wobei das Plättchen Bereiche unterschiedlicher Leiffähigkeit aufweisen kann und es während der Elektrophorese bevorzugt mit dem Pluspol verbunden ist.

2. Verfahren nach Anspruch 1, **dadurch gekennzeichnet, dass** Gerüstmaterial niedergeschlagen wird.

3. Verfahren nach Anspruch 1, **dadurch gekennzeichnet, dass** Verblendmaterial niedergeschlagen wird.

4. Verfahren nach einem der Ansprüche 1 bis 3, **dadurch gekennzeichnet, dass** das Plättchen ein Kunststoffpapier ist, das durch eine Salzlösung leitend gemacht wurde.

5. Verfahren nach einem der Ansprüche 1 bis 4, **dadurch gekennzeichnet, dass** die niedrigeren elektrischen Widerstandsbereiche durch Aluminiumfolie erzeugt werden.

6. Verfahren nach Anspruch 2, **dadurch gekennzeichnet, dass** ein Alumina - oder Zirkoniaschlicker verwendet wird.

7. Verfahren nach Anspruch 4, dass als Plättchenmaterial Nylon verwendet wird.

8. Verfahren nach Anspruch 1 oder 2, **dadurch gekennzeichnet, dass** das Plättchen Aluminafasern, insbesondere Wisker, aufweist.

9. Verfahren nach Anspruch 1 bis 8, **dadurch gekennzeichnet, dass** zwischen zwei Faserschichten des Plättchen eine leitfähige Folie, z.B. aus Aluminium, angebracht wird.

10. Verfahren nach einem der Ansprüche 1 bis 9, **dadurch gekennzeichnet, dass** das Plättchen mittels Kochsalzlösung leitfähig gemacht wird.

11. Verfahren nach einem der Ansprüche 1 bis 10, **dadurch gekennzeichnet, dass** das Plättchen einen T-förmigen Querschnitt aufweist.

12. Verfahren nach einem der Ansprüche 1 bis 8, **dadurch gekennzeichnet, dass** das Plättchen im Mittelbereich breiter ist als im Bereich der Stümpfe.

## Claims

1. Method for producing fully ceramic tooth elements having a pre-determined spatial form by means of electrophoresis, **characterized in that** an electrically conductive chip or chip which has been rendered electrically conductive is arranged directly on a working model or on a part of the framework, whereby the chip can comprise regions of different electrical conductivity and is connected preferably to the positive pole during the electrophoresis.

2. Method according to Claim 1, **characterized in that** the framework material is being deposited.

3. Method according to Claim 1, **characterized in that** the veneering material is being deposited.

4. Method according to any one of the Claims 1 to 3, **characterized in that** the chip is a synthetic paper made electrically conductive by means of a salt solution.

5. Method according to any one of the Claims 1 to 4, **characterized in that** the areas of lower electrical resistance are generated by means of aluminum foil.

6. Method according to Claim 2, **characterized in that** an alumina or zirconia slip is used.

7. Method according to Claim 4, **characterized in that** nylon is used as the chip material.

8. Method according to Claim 1 or 2, **characterized in that** the chip comprises alumina fibers, in particular wiskers.

9. Method according to Claim 1 to 8, **characterized in that** an electrically conductive foil, e.g. made of aluminum, is arranged between two fibrous layers of the chip.

10. Method according to any one of the Claims 1 to 9, **characterized in that** the chip is made electrically conductive by means of saline solution.

11. Method according to any one of the Claims 1 to 10, **characterized in that** the chip has a T-shaped cross-section.

12. Method according to any one of the Claims 1 to 8, **characterized in that** the chip is wider in the middle than in the area of the dies.

## Revendications

1. Procédé pour fabriquer des parties de dent en céramique complète avec une forme d'espace prédéfinie par électrophorèse, **caractérisé en ce qu'**une petite plaque électroconductrice ou rendue conductrice est disposée directement ou à distance sur un modèle de travail ou sur une partie de structure, la plaquette présentant des zones de conductibilités différentes et étant reliées de préférence au pôle plus pendant l'électrophorèse.

2. Procédé selon la revendication 1, **caractérisé en ce que** le matériau de structure est précipité.

3. Procédé selon la revendication 1, **caractérisé en ce que** le matériau de revêtement est précipité.

4. Procédé selon l'une quelconque des revendications 1 à 3, **caractérisé en ce que** la plaquette est un papier plastique qui a été rendu conducteur par une solution de sel.

5. Procédé selon l'une quelconque des revendications 1 à 4, **caractérisé en ce que** les zones de résistance électriques plus basses sont générées par du film d'aluminium.

6. Procédé selon la revendication 2, **caractérisé en ce qu'**une barbotine d'alumine ou une barbotine de zircone est utilisée.

7. Procédé selon la revendication 4, **caractérisé en ce que** du nylon est utilisé comme matériau de plaquette.

8. Procédé selon la revendication 1 ou 2, **caractérisé en ce que** la plaquette présente des fibres d'alumine, en particulier des fibres whiskers.

9. Procédé selon les revendications 1 à 8, **caractérisé en ce qu'**un film conducteur, par exemple à base d'aluminium, est placé entre deux couches de fibres de la plaquette.

10. Procédé selon l'une quelconque des revendications 1 à 9, **caractérisé en ce que** la plaquette est rendue conductible au moyen d'une solution de sel de cuisine.

11. Procédé selon l'une quelconque des revendications 1 à 10, **caractérisé en ce que** la plaquette présente une section en forme de T.

12. Procédé selon l'une quelconque des revendications 1 à 8, **caractérisé en ce que** la plaquette est plus large dans la partie centrale que dans la zone des moignons.
